# EUROPÄISCHE PATENTANMELDUNG

(11) **EP 1 376 812 A2**
(43) Veröffentlichungstag der Anmeldung: **02.01.2004**
(21) Anmeldenummer: 03002910.2
(22) Anmeldetag: 10.02.2003
(51) Int. Cl.: H02J 1/10, H02J 7/14

(54) **Energiebordnetz zur Versorgung eines Hochleistungsverbrauchers**

(30) Priorität: 25.06.2002 DE 10228350
(71) Anmelder: ROBERT BOSCH GMBH, 70442 Stuttgart (DE)
(72) Erfinder: Knapp, Marc, 71729 Erdmannshausen (DE)

(57) **Zusammenfassung**

Die Erfindung betrifft ein Energiebordnetz zur Versorgung eines Hochleistungsverbrauchers, insbesondere eines elektrischen Zusatzverdichters. Das Energiebordnetz weist einen Generator, einen mit dem Generator über das Bordnetz verbundenen ersten Energiespeicher und eine Vielzahl von an das Bordnetz angeschlossenen Verbrauchern auf, von denen mindestens einer ein Hochleistungsverbraucher ist. Der Hochleistungsverbraucher ist mit einem zweiten Energiespeicher verbunden, welcher über eine steuerbare Ladeund Trenneinheit an das Bordnetz angeschlossen ist.

## Beschreibung

Die Erfindung betrifft ein Energiebordnetz zur Versorgung eines Hochleistungsverbrauchers, insbesondere ein Energiebordnetz für ein Kraftfahrzeug.

### Stand der Technik

Es sind bereits Bordnetz-Architekturen bekannt, die zwei Energiespeicher aufweisen. Dies dient unter anderem dem Zweck, die Startfähigkeit eines Kraftfahrzeugs zu verbessern oder die Bordnetzspannung des Kraftfahrzeugs zu stabilisieren.

Aus der DE 199 44 833 A1 ist ein Mehrspannungsbordnetz mit wenigstens zwei von Masse verschiedenen Spannungen von beispielsweise 42V und 14V bekannt. Eine erste dieser Spannungen, nämlich die 42V-Spannung, wird von einem Generator erzeugt und zur Ladung eines ersten Energiespeichers verwendet. Die 14V-Spannung wird aus der ersten Spannung mittels eines Gleichspannungswandlers gebildet und zur Ladung eines zweiten Energiespeichers verwendet. Die beiden Spannungen dienen zur Versorgung zweier getrennter Gleichspannungsnetze, wobei im ersten Gleichspannungsnetz Hochleistungsverbraucher vorgesehen sind und im zweiten Gleichspannungsnetz Verbraucher vorgesehen sind, die eine niedrigere Versorgungsspannung benötigen. Zwischen den beiden Spannungsebenen sind als Kurzschlussschutz Mittel vorgesehen, die die Gefahr eines Kurzschlusses verringern und/oder die Auswirkungen eines Kurzschlusses zwischen den beiden Spannungen vermindern und ggf. gefährdete Verbraucher im Kurzschlussfall schützen.

Aus der nicht vorveröffentlichten DE 101 24 543.2 sind ein Verfahren und eine Vorrichtung zur Steuerung eines elektrisch betriebenen Laders bekannt, welcher mit einem Abgasturbolader zur Verdichtung der angesaugten Luft einer Brennkraftmaschine zusammenwirkt. Dabei wird ein Ansteuersignal für den elektrischen Lader gebildet, das abhängig ist von dem über den elektrischen Lader einzustellenden Druckverhältnis. Die Ermittlung des Ansteuersignals erfolgt mittels einer elektronischen Steuereinheit unter Verwendung von Informationen über den Umgebungsdruck, den Ladedrucksollwert, den Luftmassensollwert und die Motordrehzahl. Dabei kommen abgespeicherte Kennfelder zum Einsatz.

### Vorteile der Erfindung

Demgegenüber weist ein erfindungsgemäßes Energiebordnetz mit den im Anspruch 1 angegebenen Merkmalen den Vorteil auf, dass ein Betrieb von Hochleistungsverbrauchern, insbesondere eines elektrischen Zusatzverdichters, möglich ist, ohne dass störende Auswirkungen auf andere Verbraucher des Bordnetzes auftreten.

Dies wird dadurch erreicht, dass der Hochleistungsverbraucher im Sinne einer Inselnetzversorgung mit einem eigenen zweiten Energiespeicher verbunden ist, welcher über eine steuerbare Lade- und Trenneinheit an das Bordnetz angeschlossen ist. Dies ermöglicht es, den zur Versorgung des Hochleistungsverbrauchers vorgesehenen zweiten Energiespeicher selbst bei Vorliegen einer geringen Übertragungsleistung der Lade- und Trenneinheit nachzuladen. Dieses Nachladen wird in vorteilhafter Weise nur in Zeiträumen durchgeführt, in denen der Generator des Fahrzeugs nicht vollständig ausgelastet ist.

Untersuchungen haben ergeben, dass ein elektrischer Zusatzverdichter in typischen Fahrzyklen nur in ca. 5% der Gesamtdauer elektrische Energie aufnimmt. Die Durchschnittsleistung dieses Verbrauchers hängt vom Fahrzyklus ab und ist meistens mit ca. 25W gering. Daher besteht die Möglichkeit, den zweiten Energiespeicher in den übrigen 95% der Gesamtdauer nachzuladen.

Die Trennfunktion der Lade- und Trenneinheit kann darüber hinaus in Fehlerfällen oder in Ruhephasen vorteilhaft eingesetzt werden.

Der zweite Energiespeicher und der elektrische Zusatzverdichter bilden ein Inselnetz mit verringerter Spannungsstabilität. Als elektronisch geregelte Maschine kann der elektrische Zusatzverdichter seinen Leistungsbedarf aus diesem Inselnetz trotz instabiler Spannung desselben decken. Eine Rückwirkung der instabilen Spannungslage auf das übrige Bordnetz bleibt weitgehend aus. Folglich zeigt die Erfindung einen Weg, wie ein elektrischer Zusatzverdichter in ein Energiebordnetz integriert werden kann, ohne dass seine Bordnetzunverträglichkeit bezüglich bisher bekannter Bordnetze in Erscheinung tritt. Dies hat insbesondere den Vorteil, dass die Funktionen weiterer Verbraucher des Bordnetzes, die empfindlich auf Spannungsschwankungen reagieren, auch im Fahrbetrieb nicht beeinträchtigt werden.

### Zeichnung

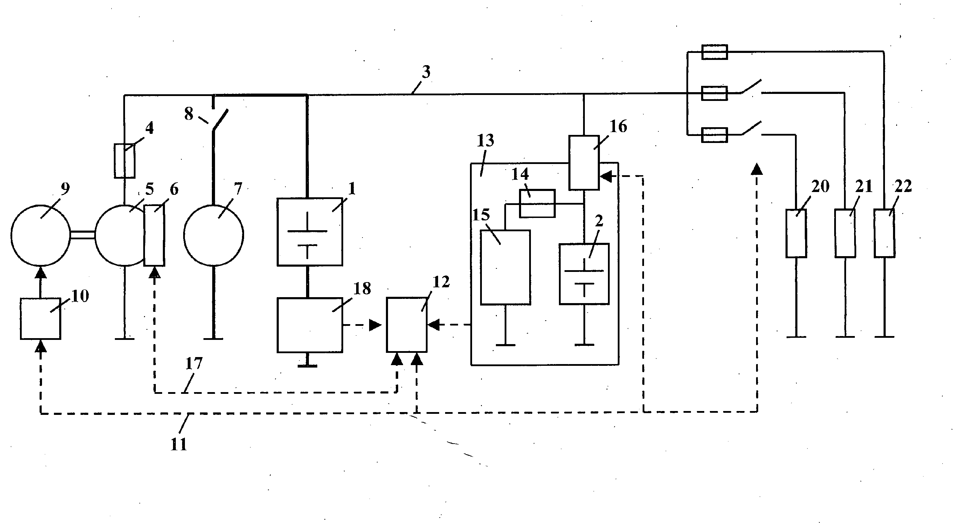

Nachfolgend wird die Erfindung anhand eines Ausführungsbeispiels näher erläutert. Die Figur zeigt ein Diagramm mit den zum Verständnis der Erfindung wesentlichen Bauteilen eines Energiebordnetzes zur Versorgung eines Hochleistungsverbrauchers.

### Beschreibung des Ausführungsbeispiels

In der Figur ist ein Energiebordnetz für ein Kraftfahrzeug dargestellt, in welchem eine erste Batterie 1 und eine zweite Batterie 2 enthalten sind. Die Nennspannung dieser beiden Batterien ist vorzugsweise gleich, sie kann aber auch verschieden sein.

Bei der Batterie 1 handelt es sich um die Hauptbatterie des Kraftfahrzeugs. Diese steht über das Bordnetz 3 und eine Sicherung 4 mit einem Bordnetzgenerator 5 in Verbindung. Dieser Bordnetzgenerator 5 ist ein riemenbetriebener Generator mit Regler 6. Weiterhin ist der Starter 7 dargestellt, der über das Starter-Relais 8 mit dem Bordnetz 3 verbünden ist. Alternativ zu 5, 6, 7 und 8 kann auch ein auf der Kurbelwelle des Kraftfahrzeugs vorgesehener integrierter Startergenerator vorgesehen sein.

Die Batterie 2 ist eine in einem Inselnetz 13 vorgesehene Zusatzbatterie, welche über eine Sicherung 14 mit einem Hochleistungsverbraucher 15 verbunden ist, bei welchem es sich um einen elektrischen Zusatzverdichter handelt.

An das Bordnetz 3 sind über einen Leistungsverteiler 19, welcher Sicherungen und Schalter enthält, Verbraucher 20, 21 und 22 angeschlossen. Die im Leistungsverteiler vorgesehenen Schalter, mittels welcher der jeweilige Verbraucher zu- oder abschaltbar ist, werden vom elektrischen Energiemanagement 12 über den CAN-Bus 11 gesteuert. Weiterhin steht die Batterie 2 über ein steuerbares Ladeund Trennmodul 16 mit dem Bordnetz 3 in Verbindung.

Der Generator 5 wird im Betrieb des Kraftfahrzeugs von einem Verbrennungsmotor 9 angetrieben, dessen Betrieb von einem Motormanagement 10 gesteuert wird. Das Motormanagement 10 steht über den CAN-Bus 11 mit einem elektrischen Energiemanagement 12 in Verbindung. Dieses elektrische Energiemanagement 12 ist für eine intelligente Koordination des Bordnetz-Energieflusses, eine optimierte Nachladung der an das Bordnetz 3 angeschlossenen Batterien 1 und 2, das Management des Lade- und Trennmoduls 16, eine Beeinflussung der Generatorregelung, beispielsweise unter Verwendung einer bitsynchronen Schnittstelle 17, das Verbrauchermanagement und eine Beeinflussung des Motormanagements 10 über den CAN-Bus 11 vorgesehen. Das elektrische Energiemanagement 12 koordiniert den Energiefluss derart, dass ein abgestimmter Betrieb des elektrischen Zusatzverdichters 15 ermöglicht wird, wobei die Stabilität des Bordnetzes gewährleistet ist.

Das elektrische Energiemanagement 12 bezieht Eingangssignale von einer Batteriezustandserkennung 18, die an die erste Batterie 1 angeschlossen ist, um deren Zustand zu ermitteln. Zu diesem Zweck wertet die Batteriezustandserkennung die Batteriespannung, den Batteriestrom und die Batterietemperatur aus. In einer Variante kann die Batteriezustandserkennung 18 auch in die Plus-Leitung eingebunden werden.

Gemäß einer vorteilhaften Ausgestaltung der Erfindung erfasst die Batteriezustandserkennung 18 auch den Zustand der zweiten Batterie 2. Dadurch ist ein verbessertes Energiemanagement möglich, da genauere Informationen über die momentane Leistungsfähigkeit der dem Bordnetz angehörenden Batterien vorliegen.

Die zweite Batterie 2, deren Hauptaufgabe darin besteht, die vom elektrischen Zusatzverdichter 15 benötigte Energie bereitzustellen, kann in vorteilhafter Weise auch als Zusatzbatterie für den Motorstart verwendet werden. Dies bringt den Vorteil mit sich, dass bei einem Starten des Kraftfahrzeugs keine Spannungseinbrüche im Bordnetz 3 auftreten. Dadurch wird beispielsweise ein unterbrechungsfreier Betrieb des Autoradios und des Autotelefons ermöglicht.

Mittels des elektrischen Zusatzverdichters 15, der an einen Datenbus des Fahrzeugs angeschlossen ist, wird eine erhebliche Leistungs- und Effizienzsteigerung des Verbrennungsmotors 9 des Kraftfahrzeugs erreicht. Durch eine Kompensation zu geringer Drehmomente in bestimmten Drehzahlbereichen erlaubt der Einsatz eines derartigen elektrischen Zusatzverdichters auch eine Verringerung der Motorengröße.

Bei diesem elektrischen Zusatzverdichter 15 handelt es sich um ein elektrisch betriebenes Aggregat bzw. einen Verbraucher, welcher elektrische Leistung aus dem Bordnetz 3 des Kraftfahrzeugs benötigt. Die Leistungsanforderungen eines elektrischen Zusatzverdichters sind mit Bordnetzen, die nach dem Stand der Technik arbeiten, ohne ungewünschte Rückwirkungen auf andere Verbraucher des Bordnetzes nicht erfüllbar.

Ein elektrischer Zusatzverdichter ist im Unterschied zu anderen Hochleistungsverbrauchern wie einer elektrohydraulischen Bremse und einer elektromechanischen Lenkhilfe ein Hochleistungsverbraucher, dessen Funktionen nur sehr begrenzt sicherheitsrelevant sind. Dies erlaubt es, bei Bedarf eine Sonderbetriebsart des elektrischen Zusatzverdichters einzuleiten, in welcher die an ihn gestellten Anforderungen reduziert sind. Da der elektrische Zusatzverdichter als EC-Motor ausgeführt ist, unterstützt er diese Varianten der Ansteuerung.

Untersuchungen haben gezeigt, dass ein elektrischer Zusatzverdichter in typischen Fahrzyklen nur in ca. 5% der Gesamtdauer elektrische Energie aufnimmt. Die vom elektrischen Zusatzverdichter aufgenommene Durchschnittsleistung ist mit ca. 25W gering. Dies erlaubt es, die in der Figur gezeigte zweite Batterie 2, deren Hauptaufgabe die Versorgung des elektrischen Zusatzverdichters 15 ist, in den verbleibenden 95% der Gesamtdauer des Fahrzyklus auch bei nur geringer Übertragungsleistung des Lade- und Trennmoduls 16 aus dem Bordnetz 3 nachzuladen.

Die zweite Batterie 2 und der elektrische Zusatzverdichter 15 sind Bestandteile eines Inselnetzes 13, welches über das steuerbare Lade- und Trennmodul 16 an das übrige Bordnetz anschaltbar und von diesem trennbar ist. Die zugehörige Ansteuerung des Lade- und Trennmoduls erfolgt durch das elektrische Energiemanagement 12. Ein Anschalten der zweiten Batterie 2 an das Bordnetz 3 erfolgt zum Nachladen der zweiten Batterie 2 aus dem Bordnetz 3 und auch bei einem Starten des Verbrennungsmotors 9, um Spannungseinbrüche auf dem Bordnetz zu vermeiden bzw. zu begrenzen. Ein Abtrennen der zweiten Batterie 2 vom Bordnetz 3 erfolgt stets bei einer Aktivierung des elektrischen Zusatzverdichters 15, um Rückwirkungen auf das übrige Bordnetz bzw. die daran angeschlossenen Verbraucher 20, 21 und 22 zu vermeiden. Ein Abtrennen der zweiten Batterie 2 vom Bordnetz 3 erfolgt auch dann, wenn im Bordnetz Fehler erkannt werden, und in Ruhephasen. Ein vollständiges Abtrennen ist jedoch nicht erforderlich, wenn das Lade- und Trennmodul 16 über eine Strombegrenzung verfügt.

Das genannte Inselnetz 13 weist im Vergleich zum- Bordnetz 3 eine verringerte Spannungsstabilität auf. Trotz dieser vergleichsweise instabilen Spannung des Inselnetzes kann der elektrische Zusatzverdichter 15 die von ihm benötigte Leistung aus diesem Inselnetz beziehen. Eine Rückwirkung der instabilen .Spannungslage im Inselnetz auf das übrige Bordnetz bleibt weitgehend aus. Dies gilt insbesondere dann, wenn das Lade- und Trennmodul 16 einen Gleichspannungswandler aufweist, über welchen das Inselnetz mit einer auf ca. 150W begrenzten Leistung gespeist wird.

Das oben beschriebene Nachladen der zweiten Batterie 2 wird in vorteilhafter Weise auf die Zeiträume begrenzt, in denen der Generator 5 des Kraftfahrzeugs nicht vollständig ausgelastet ist. Dieser Zustand wird über das DFM-Signal (Dynamo-Feld-Monitorsignal) des Generatorreglers ermittelt und bei der Ermittlung der Sollspannung auf der Sekundärseite des Lade- und Trennmoduls 16 berücksichtigt.

Um eine Steuerung des Betriebes des elektrischen Zusatzverdichters 15 durchzuführen, erfolgt unter anderem eine Ermittlung der Leistungsfähigkeit im Inselnetz unter Verwendung einer Spannungsmessung am elektrischen Zusatzverdichter 15. Dabei wird eine bestimmte Belastung vorgegeben und überprüft, ob bei dieser Belastung übermäßige Spannungseinbrüche auftreten oder nicht.

Unterschreitet die gemessene Spannung einen vorgegebenen Schwellenwert, dann ist die Leistungsfähigkeit des Inselnetzes reduziert. Als Folge davon wird der elektrische Zusatzverdichter 15 in eine Sonderbetriebsart gebracht, in welcher die an ihn gestellten Anforderungen reduziert sind. Da in dieser Sonderbetriebsart Einschränkungen der Motorleistung vorliegen, wird dieser Zustand dem Fahrer des Kraftfahrzeugs in geeigneter Weise signalisiert.

Unter Verwendung einer Ruhespannungsmessung im Inselnetz kann der Ladezustand der zweiten Batterie 2 ermittelt werden. Ergibt diese Messung, dass der Ladezustand der zweiten Batterie 2 niedrig ist, dann kann der Ladevorgang der zweiten Batterie 2 aus dem Bordnetz 3 mit erhöhter Priorität vorgenommen und der elektrische Zusatzverdichter 15 in die Sonderbetriebsart mit reduzierten Anforderungen überführt werden.

In diese Sonderbetriebsart mit reduzierten Anforderungen wird der elektrische Zusatzverdichter 15 auch dann gebracht, wenn die Batteriezustandserkennung 18 einen Ausfall der ersten Batterie 1 erkennt. In diesem Fall wird die zweite Batterie 2 starr mit dem Bordnetz 3 verbunden, so dass die fehlende Pufferwirkung der ersten Batterie 1 durch die Pufferwirkung, der zweiten Batterie 2 kompensiert wird. Der Vorteil dieser Maßnahme besteht darin, dass die Fahrzeugverfügbarkeit gesteigert ist. Die Fahrtmöglichkeit bis zur nächsten Werkstatt ist gewährleistet.

Nach alledem beschreibt die Erfindung einen Weg, einen elektrischen Zusatzverdichter in ein Energiebordnetz zu integrieren, ohne dass dessen Bordnetzunverträglichkeit, die bei einem herkömmlichen Bordnetz besteht, in Erscheinung tritt. Dies wird im wesentlichen dadurch erreicht, dass der elektrische Zusatzverdichter mit einem zweiten Energiespeicher des Bordnetzes verbunden ist und zusammen. mit diesem Bestandteil eines Inselnetzes ist. Dieses steht über eine steuerbare Lade- und Trenneinheit mit dem übrigen Bordnetz in Verbindung. Je nach Bedarf kann das Inselnetz an das übrige Bordnetz angekoppelt oder von diesem abgekoppelt werden. Das Wesen der Erfindung ist auch auf den Betrieb anderer Hochleistungsverbraucher und auf Kombinationen bestimmter Verbraucher übertragbar. Die beiden Energiespeicher können für den jeweiligen Anwendungszweck optimiert ausgelegt werden.

Es besteht auch die Möglichkeit, das Inselnetz um weitere Verbraucher zu ergänzen, deren Eigenschaften den im Inselnetz herrschenden Verhältnissen gerecht werden.

## Patentansprüche

1. Energiebordnetz zur Versorgung eines Hochleistungsverbrauchers, mit
- einem Generator (5),
- einem mit dem Generator über das Bordnetz verbundenen ersten Energiespeicher (1), und
- einer Vielzahl von an das Bordnetz angeschlossenen Verbrauchern (15, 20, 21, 22), von denen mindestens einer ein Hochleistungsverbraucher ist, wobei
- der Hochleistungsverbraucher (15) mit einem zweiten Energiespeicher (2) verbunden ist, welcher über eine steuerbare Lade- und Trenneinheit (16) an das Bordnetz angeschlossen ist.

2. Energiebordnetz nach Anspruch 1, **dadurch gekennzeichnet, dass** der Hochleistungsverbraucher (15) ein elektrischer Zusatzverdichter ist.

3. Energiebordnetz nach Anspruch 1 oder 2, **dadurch gekennzeichnet, dass** der Hochleistungsverbraucher (15) und der zweite Energiespeicher (2) ein Inselnetz (13) mit verringerter Spannungsstabilität bilden.

4. Energiebordnetz nach einem der vorhergehenden Ansprüche, **dadurch gekennzeichnet, dass** die Lade- und Trenneinheit (16) einen-Gleichspannungswandler aufweist.

5. Energiebordnetz nach Anspruch 4, **dadurch gekennzeichnet, dass** der Gleichspannungswandler ein Gleichspannungswandler ist, über welchen das Inselnetz mit einer begrenzten Leistung gespeist wird.

6. Energiebordnetz nach einem der vorhergehenden Ansprüche, **dadurch gekennzeichnet, dass** es ein Energiemanagement (12) aufweist, welches zur Steuerung der Nachladung des zweiten Energiespeicher (2) aus dem Bordnetz vorgesehen ist.

7. Energiebordnetz nach Anspruch 6, **dadurch gekennzeichnet, dass** das Energiemanagement (12) Steuersignale für die Lade- und Trenneinheit (16) erzeugt.

8. Energiebordnetz nach Anspruch 6 oder 7, **dadurch gekennzeichnet, dass** das Energiemanagement (12) Steuersignale für einen den Verbrauchern (20, 21, 22) vorgeschalteten Leistungsverteiler (19), Steuersignale für eine Generatorregelung und Steuersignale für ein Motormanagement (10) erzeugt.

9. Energiebordnetz nach einem der Ansprüche 6 - 8, **dadurch gekennzeichnet, dass** es eine Vorrichtung (18) zur Erkennung des Zustands des ersten Energiespeichers (1) aufweist, deren Ausgangssignale dem Energiemanagement (12) zugeführt werden.

10. Energiebordnetz nach einem der Ansprüche 6 - 9, **dadurch gekennzeichnet, dass** es eine Vorrichtung (18) zur Erkennung des Zustands des zweiten Energiespeichers (2) aufweist, deren Ausgangssignale dem Energiemanagement (12) zugeführt werden.

11. Energiebordnetz nach einem der vorhergehenden Ansprüche, **dadurch gekennzeichnet, dass** die vom zweiten Energiespeicher (2) gelieferte Energie zum Startvorgang eines Verbrennungsmotors verwendet wird.

12. Energiebordnetz nach einem der vorhergehenden Ansprüche, **dadurch gekennzeichnet, dass** es das Energiebordnetz eines Kraftfahrzeugs ist und dass das Energiemanagement (12) an einen Bus des Kraftfahrzeugs angeschlossen ist.

13. Energiebordnetz nach Anspruch 12, **dadurch gekennzeichnet, dass** der Bus ein CAN-Bus (11) ist.

14. Energiebordnetz nach einem der vorhergehenden Ansprüche, **dadurch gekennzeichnet, dass** es einen Spannungsmesser aufweist, der zur Messung der am Hochleistungsverbraucher (15) abfallenden Spannung vorgesehen ist.

15. Energiebordnetz nach Anspruch 14, **dadurch gekennzeichnet, dass** das Energiemanagement (12) die gemessene Spannung mit einem vorgegebenen Schwellenwert vergleicht und dann, wenn die gemessene Spannung kleiner ist als der vorgegebene Schwellenwert, den Hochleistungsverbraucher (12) in eine Sonderbetriebsart mit reduzierten Anforderungen umschaltet.

16. Energiebordnetz nach einem der vorhergehenden Ansprüche, **dadurch gekennzeichnet, dass** das Energiemanagement (12) bei einem erkannten Ausfall des ersten Energiespeichers (1) den zweiten Energiespeicher (2) starr mit dem Bordnetz verbindet.

17. Energiebordnetz nach einem der vorhergehenden Ansprüche, **dadurch gekennzeichnet, dass** die Nennspannungen der beiden Energiespeicher übereinstimmen.
